**Europäisches Patentamt**

**European Patent Office**

**Office européen des brevets**

(11) Publication number: **0 064 357**
**A1**

(12) # EUROPEAN PATENT APPLICATION

(21) Application number: **82302029.2**

(22) Date of filing: **20.04.82**

(51) Int. Cl.³: **B 60 T 15/20**
**B 60 T 13/62**

(30) Priority: **01.05.81 GB 8113441**

(43) Date of publication of application:
**10.11.82 Bulletin 82/45**

(84) Designated Contracting States:
**BE DE FR IT NL SE**

(71) Applicant: **BENDIX LIMITED**
**Douglas Road**
**Kingswood, Bristol BS15 2NL(GB)**

(72) Inventor: **Lippiatt, Sidney Alan**
**14 Magdalen Avenue**
**Bath BA2 4QB(GB)**

(72) Inventor: **Dale, Robin John**
**16 Ryecroft Rise Long Ashton**
**Bristol. BS18 9NQ(GB)**

(74) Representative: **Turner, Alan Reginald**
**BENDIX LIMITED Douglas Road**
**Kingswood, Bristol BS15 2NL(GB)**

(54) **Relay valves with output pressure predominance.**

(57) In a trailer brake control relay valve (107) trailer brake pressure predominance over tractor control pressure is provided by a peripheral area (10) of the piston (9) of the relay valve being subject to a predetermined pressure differential by virtue of a further valve device (42, 43) carried within the piston.

*FIG.3*

EP 0 064 357 A1

Relay Valves with Output Pressure Predominance.

This invention relates to relay valves with output pressure predominance and relates especially to relay valves for controlling trailer braking in fluid pressure operable tractor/trailer braking systems.

In tractor/trailer fluid pressure operable braking systems it has been proposed to provide on a tractor vehicle a fluid pressure relay valve operable in response to a fluid pressure tractor braking pressure signal to produce a corresponding pressure signal for transmission via a pipe coupler to control the brakes of a trailer connected thereto. In the interests of stability of the tractor/trailer combination it is often a requirement that a rising trailer brake pressure shall lead and be greater than a corresponding rising tractor brake pressure. In order to achieve such a lead and predominance of the trailer braking pressure over the tractor braking pressure, it has been proposed to provide a trailer relay valve the characteristic of which provides for such predominance of tractor brake pressure.

One such relay valve is described in the specification of U.K. Patent 1,294,987 wherein pressure responsive means which responds to a tractor vehicle pressure signal is formed of two parts one of which parts is biassed with respect to the other part and is so arranged that both parts are responsive to the tractor vehicle pressure signal up to a given value whereafter a main valve controlling part is operative and the spring bias acts in the same sense as the tractor vehicle pressure to provide a fixed prdominance for the trailer control pressure output. This type of relay valve wherein predominance is provided by a mechanical spring acting on the main valve controlling part is acted upon by a spring has a tendency towards instability and has sliding seals which may introduce appreciable hysteresis.

The present invention seeks to provide a valve in which one or both of the above shortcomings are reduced.

According to the present invention there is provided a fluid pressure operable vehicle braking system relay valve having a double valve operable to connect an output pressure port alternatively to a supply port or to a vent port in accordance with controlling pressures acting upon a main pressure responsive means, a first pressure responsive area of said means being subject to control pressure at a control pressure port and a second opposing pressure responsive area of said pressure responsive means being subject to pressure at said output port and characterised by a further valve device operable to impose a predetermined pressure differential across a discreet portion of the pressure responsive means in a sense to further oppose the action of the control pressure and thereby provide the pressure delivered to the output port with a predetermined predominance in relation to the control pressure.

In order that the invention may be more clearly understood and readily carried into effect, the same will be further described by way of example with reference to the accompanying drawings of which:

Figs. 1 and 2 show simplified tractor and trailer vehicle braking systems.

Figs. 3 and 4 illustrate multi-circuit relay valves embodying alternative examples of the present invention,

Fig. 5 illustrates a characteristic for the relay valve of Fig. 1 and,

Fig. 6 illustrates a characteristic for the relay valve of Fig. 2.

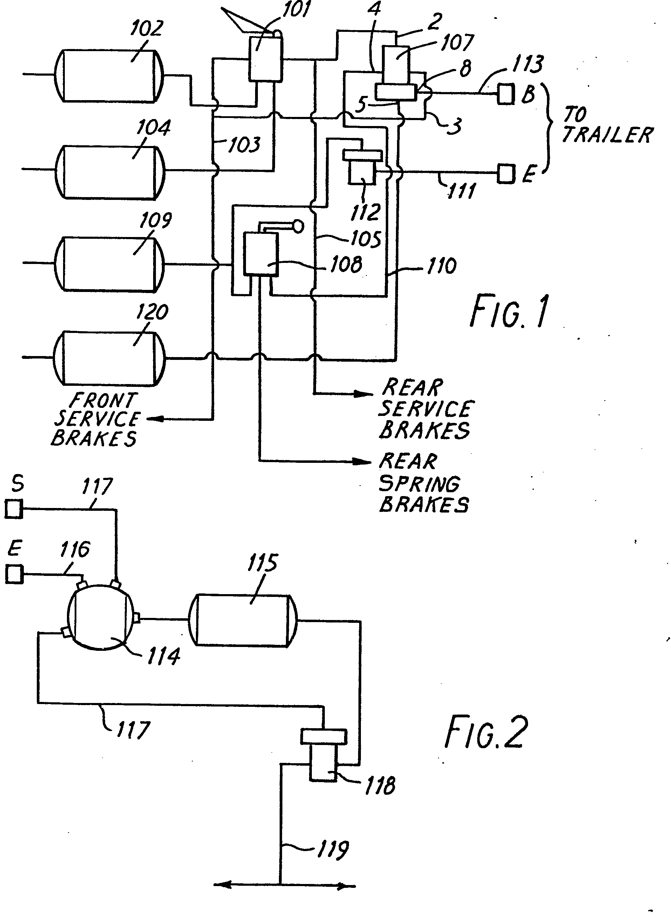

Referring to Fig. 1, the simplified trailer vehicle brake system shown therein comprises a dual foot valve 101 for deriving from one reservoir 102 a brake pressure for application to a front axle control pressure line 103. This foot valve also derives from a reservoir 104 a brake control pressure for application to a rear axle brake pressure line 105 and to a first circuit input port 2 of a multi-relay valve 107 a second circuit output 3 of which receives pressure from the front circuit 103. A secondary and park control valve denoted by reference 108 is operable hy hand and derives its pressure intput from a third reservoir 109. This secondary valve provides an inverse pressure on line 110 to hold the rear spring brakes released in normal running and also provides an inverse pressure over a further line 110 to constitute an input to an input port 4 of the multi-relay valve 107. The output of the latter appears on a trailer service control line connected to port 8 and derives its supply from a further reservoir 120 through a connection to port 5. The construction of various embodiments of the multi-relay valve will be further described below.

The system also includes an emergency or trailer 0064357 line supplied via a relay valve 112 from reservoir 120 in known manner signalled from reservoir 109 to provide for two pipe operations of a trailer brake control circuit as shown in simplified form in Fig. 2.

The trailer circuit of Fig. 2 has service and emergency line connections to a normal type of relay emergency valve which charges a reservoir 115 from the emergency or supply line. Control pressure applied to the control line 117 from the multi-relay valve 107 on the towing vehicle produces a proportionable output on line 117 to operate a relay valve 118 to apply brake pressure to trailer brake actuators over line 119 from the reservoir 115. Failure of the emergency line pressure on line 116 results in pressure being applied directly from the reservoir 115 to the trailer brakes.

0064357

In normal running conditions full-charged pressure is applied from reservoir 104 to the point 5 of the multi-relay valve together with inverse pressure at the port 4 under control of the hand valve 108. Under these conditions the output pressure at port 8 of valve 107 is zero. Application of the foot valve pressure at port 2 results in a proportionate trailer brake output pressure at port 8 together with an added predominance. Alternatively, if the pressure at port 2 is sensibly less than that at port 3 from the front brake circuit the pressure at port 3 operates to cause valve 107 to introduce a proportionate trailer service brake pressure.

Operation of the secondary brake valve 108 from its release condition to apply secondary braking by reducing the pressure to the rear spring brakes on the tractor has the result of also reducing the inverse pressure on the other output 110 as applied to the port 4. This again causes the multi-relay valve 107 to apply a proportionate tractor brake control pressure via port 8 to the trailer service line 113.

On parking of the vehicle combination, the normal release pressure is vented from the rear spring brakes by the valve 108 but full pressure is held on the line 110 connected to port 4 of the multi-relay valve which results in the valve 107 adopting a park position with no braking pressure on the trailer, to satisfy tractor-trailer regulations.

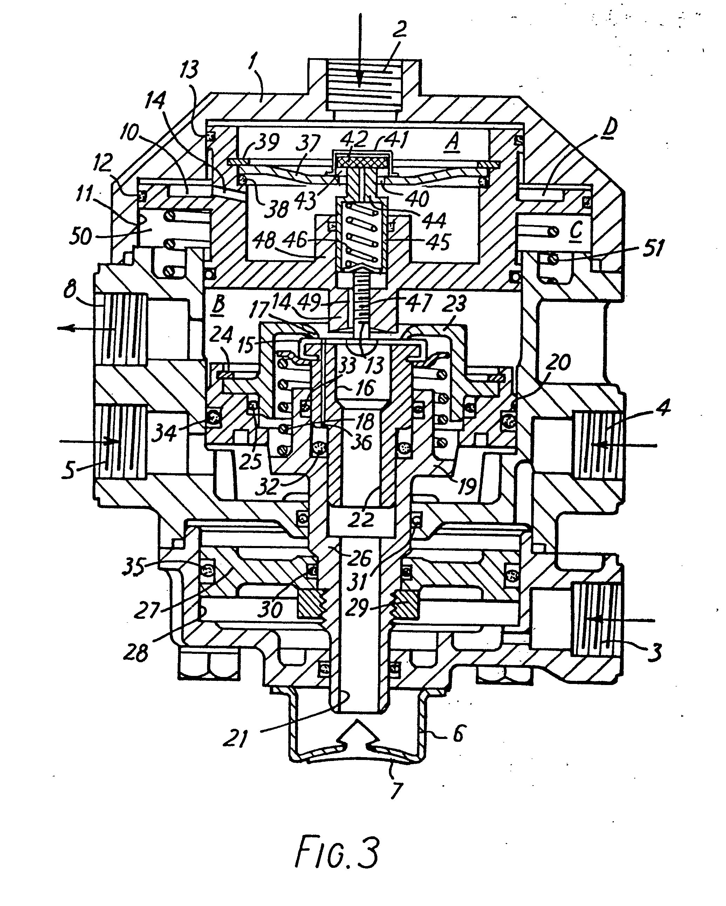

Referring to Fig. 3 of the drawings, the example of the multi-relay valve shown therein comprises a main housing 1 having a first tractor brake circuit input control pressure port 2, a second tractor circuit brake pressure input port 3, a third inverse hand brake pressure input port 4 a reservoir pressure input port 5 a vent port 6 provided with a rubber dirt excluder 7 and a trailer brake control pressure delivery port 8. Sealingly slideable within the housing 1 there is provided a first pressure responsive member in the form of a piston 9 extending radially of which there is a peripheral part 10 sealingly slideable in the larger bore 11 with a seal 12 the region between a seal 13 on the smaller diameter part and the seal 12 being connected via a passage 14 with the interior of the piston. The piston is urged upward by a balancing spring 51. A downward projection 14 of the piston forms an exhaust valve seat engageable with a double valve member 15 carried by a valve sleeve 16 resiliently upwardly urged against an inlet valve seat 17 by a captive spring 18 acting between it and the interior of a second piston 19 which itself is sealingly slideable in a cylindrical portion 20 of the housing and has a downward projection extending outwardly to the vent port 6. The interior of the downward projection is provided with a vent passage 21 coaxial with the central bore 22 of the valve sleeve 16. The inlet valve seat 17 is formed inwardly of a part 23 retained within the second piston 19 by means of an internal circlip 24 as shown and also provided with a seal 25. Mounted on the aforementioned downward projection of the piston 19 denoted by reference 26 there is a third piston 27 sealingly slideable in a further cylindrical portion 28 in the lower part of the housing, the piston 27 being retained on projection 26 by a threaded nut 29 and provided with a fixed seal 30. Various other captive seals 31, 32, 33, 34 and 35 are provided on the second piston assembly to separate regions where pressure differences occur. Furthermore, the small region between seals 32 and 33 is provided with a pressure, equalising passage 36.

Returning to the first piston 9, mounted in the interior of this piston there is a wall 37 retained between a seal 38 and a circlip 39, the wall 37 having a central aperture 40 covered by a small cage 41 retaining a freely moveable resilient disc valve member 42 which is engageable with a valve seat 43 or with the upper end of a stem 44 of a resiliently biassed piston 45 the bias being provided by a spring 46 the tension of which is adjustable by a set-screw 47 by the assembly of the piston 9 into the housing. The piston 45 is sealingly slideable within an upstanding cylindrical portion 48 in the interior of the piston 9 and a small passage 49 is provided whereby the underside of the piston 45 can communicate with atmosphere via the bores 22, 21 and vent port 6.

In operation of the multi-relay valve described above, the valve is assumed to be connected into a brake circuit of a tractor vehicle designed for operation with a towed trailer the brakes of which are operable by either of two circuits of a dual circuit foot valve on the tractor or by operation of an inverse spring brake control valve normally manually operated on the tractor. The outputs of the discreet circuits of the dual foot valve 101 are connected to the ports 2 and 3 respectively and it will be appreciated that on operation of the dual foot valve if both circuits are working correctly, the pressure at ports 2 and 3 can be expected to be substantially identical. At the same time, assuming the hand brake 108 of the vehicle is not operated for the purposes of operating spring brakes on the tractor, a predetermined full spring brake release pressure will be normally present at port 4 which is connected to communicate with the region above the piston 27 whereas one dual foot valve circuit pressure is applied beneath the piston 27. The pressure reservoir 120 provided on the tractor is connected at port 5 and the port 8 is connected to a coupler for connection to the trailer braking system itself.

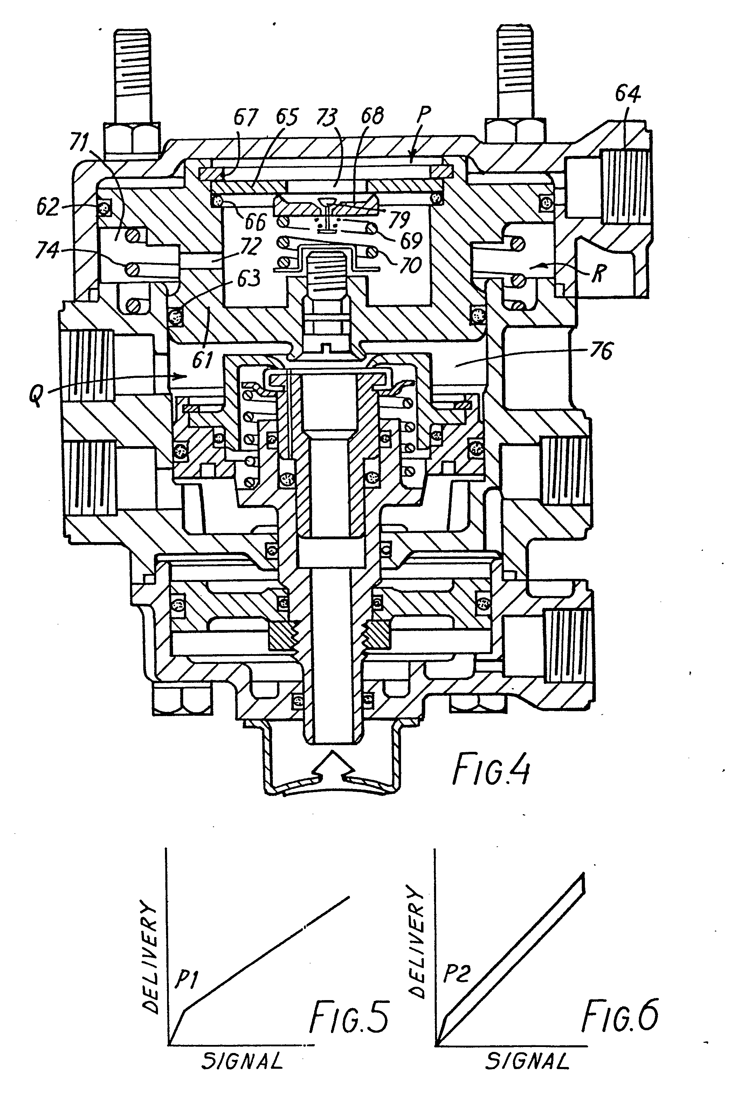

Assuming the system is fully charged and all brakes are released, the relay valve assembly will be in the position shown but on applying the foot brake, the resultant pressure rise occurring at port 2 acts above the central portion of the piston 9 and also passes through the cage 41 around unseated resilient valve member 52 through port 40 into the region beneath the wall 37 and via passage 14 into the region above the peripheral part 10 of the piston. Thus the input port pressure acts over the whole of the area of piston 9 and the peripheral part 10. The effect of the pressure at port 2 is thus a downward resultant force on the piston whereupon the extension 14 comes into engagement with the upper surface of the double valve 15 and closes off the communication between the output port 8 and the vent port 6. The result of this is that air under pressure from the reservoir at port 5 is allowed to pass to the output port 8 and also to act beneath the central portion of the piston 9 thereby tending to urge the assembly upwards to tend to make the double valve lap off. Owing to the difference between the areas which are effective beneath and above the piston 9 bearing in mind the area of the peripheral part 10 it will be seen that in an equilibrium condition, the pressure at the port 8 will be substantially greater than the pressure at the port 2. As the pressure at the input port 2 increases beyond a certain level, corresponding to point P1 in Fig.5 the bias of spring 46 is overcome and the small piston 45 moves downwards to enable the resilient valve disc 42 to engage the seat 43 thereby interrupting the connection between the input port 2 and the region above the peripheral part 10 of the piston. This results in a substantially fixed pressure being above 10 for further increases of input port pressure and therefore results in a correspondingly fixed predominance of trailer brake control signal at port 8 over and above the tractor brake pressure signal port 2. In the event of slight overcharge of the pressure in the region beneath the wall 37, the resultant downward deflection of the small piston 45 results in the upper end of the projection 44 unseating from the resilient valve disc 42 and allowing slight venting through the central bore and the passage 49 to the vent port 6.

Upon brake release the delivered pressure returns down the same characteristic as in Fig. 5 which ignores normal hysteresis due to the seals etc., for the sake of illustration.

Considering briefly the effect of the lower or third piston 27, in normal circumstances when the circuits are all properly operative the piston 27 retains the piston 19 in its downward position as shown, owing to the effect of the inverse spring brake pressure acting above piston. 27 and the output pressure at port 8 acting above the piston 19 together with its predominance, never being overcome by the second dual circuit pressure at port 3. In the absence however of the first circuit of the dual circuit valve giving rise to such a downward force on the piston 19, the pressure acting underneath the piston 27 is such as to move the central piston assembly and piston 19 upwards so that the double valve is again operated by virtue of such movement until a pressure is produced at the output port 8 acting downwards on the piston 19 to cause the double valve 14, 15, 17 to lap off in a stable condition. Clearly, with such operation in response to the pressure in port 3, there is no predominance such as provided by operation in response to an intact brake circuit connected to port 2.

Again, in the event of a reduction of the inverse spring brake pressure signal at port 4, the reservoir pressure acting beneath the piston 19 is such as to cause a resultant upward movement of the central piston assembly 19 to cause operation of the double valve 14, 15, 17 to produce a graduable output trailer control pressure at port 8 in accordance with the inverse brake pressure control signal at port 4.

In either of the above three cases release of the brakes is effective to cause the separation of the stem 14 and the double valve seat 15 thereby enabling venting of the trailer control pressure at port 8 via the unseated vent valve, passages 22, 21 and vent port 6.

In an alternative arrangement of the invention, the pressure responsive valve device which is operable by virtue of the piston 45 and which in Fig. 1 acts between the input port 2 and the peripheral region above the part 10 of the piston 9, can be replaced by a similarly biassed pressure responsive valve connected between the chamber beneath the piston 9 as connected to delivery port 8 and the region above the peripheral part 10 of the first piston.

Various other embodiments of the invention will be apparent to persons skilled in the art of fluid pressure braking system relay valves. Instead of introducing a lim ited pressure as proposed in the above examples to assist the effect of the pressure at the control port it is equally possible to apply a pressure which is reduced by a fixed amount to oppose the effect of the control port pressure now acting over the whole of the upper area of the piston. Such an alternative embodiment of a multi-relay valve employing the invention is shown in Fig. 2. The double valve means and the second and third pressure responsive means 19, 27 of the multi-relay valve are substantially the same as the corresponding parts of Fig. 3. However, the upper part of the housing 1 and the pressure responsive upper piston 9 of Fig. 3 have now been modified.

In Fig. 4, the upper piston 61 now has two seals 62 and 63 being of larger diameter than 63 to provide

a peripheral area of the piston across which the pressure differential can be controlled to determine the predominance of the relay output in relation to the control input at port 64 which now acts continuously over the whole upper area of piston 61. This control is achieved by providing in the piston 61 a wall 65 held in against a seal 66 by a circlip 67 and a check valve member 68 biassed by a spring 69 covers and aperture 73. The biass of spring 69 is adjustable on assembly by a central screw 70 and a small pressure relief one-way check valve 79 is provided in the centre of member 67. A passage 72 provides a connection between the central region of the piston and the peripheral area 71. A biassing balancing spring 74 is also included in the latter region.

In operation of Fig. 4 assuming that it is included in a system the same as discussed above with reference to Fig. 3, it will be seen that upon application of control pressure above the piston 61, since this acts on the whole area of piston 61, whereas the output pressure acts only on an area enclosed by seal 63, the relay valve exhibits a progressively increasing predominance of output up to the preset value represented by point P2 in Fig. 6 at which value 68 allows control air to be fed via aperture 73 and passage 72 to the region 71. From that value upwards the predominance is a fixed amount. Upon reduction of the fluid control pressure below a preset value, the pressure in 71 is relieved via check valve 79 and the predominance is therefore correspondingly removed as the brakes are released, in accordance with a characteristic such as shown in Fig. 6.

0064357

In yet another alternative the relay valve of Fig. 4 may be modified in such a manner that a pressure reducing valve element is arranged to reduce pressure derived from the region 76 beneath the piston so that the pressure applied to the region 71 is derived from the pressure delivered to the output port. Depending upon the design of the valve since a greater area of the piston is then subject to output pressure variations the probability of oscillation occurring may be expected to be higher in such an alternative.

In each of the brake systems relay valves described in the foregoing it is seen that the predominance of the output pressure in relation to the input pressure is achieved by virtue of a predetermined fluid pressure differential acting over a distinct part of a main pressure responsive piston. Apart from a normal return spring the necessity for a spring acting upon the main pressure responsive piston is therefore avoided. Furthermore, by maximising the relationship between pressure responsive areas of the piston to the circumferential lentth of the sliding piston seals the hysteresis of the valve characteristics may be minimised.

Whilst the relay valve described in the foregoing is intended as a multi-relay valve for use on a tractor vehicle to produce an output pressure with predominance to a trailer vehicle braking system when connected, the invention may be applied if required to a trailer relay valve or trailer relay emergency valve as mounted on a trailer vehicle to be responsive to controlling pressure derived via a pipe coupling from a towing tractor vehicle. By such 0064357 predominance may therefore be created on the trailer vehicle itself which could be additional to or instead of predominance generated on the towing tractor vehicle.

CLAIMS                                                    0064357

1.   A fluid pressure operable vehicle braking system relay valve having a double valve (14,15,17) operable to connect an output pressure port (8) alternatively to a supply port (5) or to a vent port (21) in accordance with controlling pressures acting upon a main pressure responsive means, a first pressure responsive area (A or P) of said means being subject to control pressure at a control pressure port (2) and a second opposing pressure responsive area (B or Q) of said pressure responsive means being subject to pressure at said output port and characterised by a further valve device (41 - 46) operable to impose a predetermined pressure differential across a discreet portion (C or R) of the pressure responsive means in a sense to further oppose the action of the control pressure and thereby provide the pressure delivered to the output port (8) with a predetermined predominance in relation to the control pressure.

2.   A fluid pressure operable vehicle braking system relay valve as claimed in claim 1, characterised in that the pressure responsive means comprises a piston (9) and said discreet portion (C) is a peripheral portion of the piston sealed with respect to the first and second areas (A and B) and one side of said peripheral portion being supplied with a limited fluid pressure by said further valve device in a sense to assist the control pressure and the other side of said portion being vented.

3.   A fluid pressure operable vehicle braking system valve as claimed in claim 2, characterised in that the limited fluid pressure is derived from the pressure at the control  port.

4. A fluid pressure operable vehicle braking system as claimed in claim 2, characterised in that the limited fluid pressure is derived from the pressure delivered at the output port.

5. A fluid pressure operable vehicle braking system relay valve as claimed in claim 3 or 4 characterised by said further valve means being carried within said piston and comprising a biassed pressure responsive valve (41) operable to apply said limited fluid pressure up to a predetermined value to said one side of the peripheral portion.

6. A fluid pressure operable vehicle braking system valve as claimed in claim 1 characterised in that the pressure responsive means comprises a piston and said discreet portion (R) is a peripheral portion of the piston sealed with respect to the second area (Q) to provide a said second area which is supplied with fluid pressure reduced by a predetermined amount in relation to the pressure at the input control port (or the delivered pressure at the output port).

7. A fluid pressure operable vehicle braking system valve as claimed in claim 6 characterised by said further valve comprising a lightly biassed one-way valve (68) carried by the piston to derive said reduced pressure from the pressure at the control port.

8. A fluid pressure operable vehicle braking system valve as claimed in claim 6, characterised by said further valve comprising a lightly biassed one-way valve carried by the

- 3 -

piston to derive said reduced pressure from the delivered 0064357 . pressure at the output port.

9.    A fluid pressure operable vehicle braking system valve substantially as described herein with reference to Fig. 3 or Fig. 4 of the accompanying drawings.

FIG. 1

FIG. 2

FIG.3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 918 032   (GRAUBREMSE) <br><br> *Page 13, line 12 to page 15, line 7; page 18, line 16 to page 19, line 25; figures 1,6,7,8 and 10* | 1-3,5, 6,9 | B 60 T   15/20 <br> B 60 T   13/62 |
| | --- | | |
| X | FR-A-2 407 105  (MAGNETI MARELLI) <br> *Page 3, line 4 to page 5, line 33; figures 1 and 2* | 1,9 | |
| | --- | | |
| A | FR-A-2 235 821  (BOSCH) | | |
| | --- | | |
| A | DE-A-2 246 242  (BOSCH) | | |
| | --- | | TECHNICAL FIELDS SEARCHED (Int. Cl. ³) |
| A | DE-A-2 016 558  (MAGNETI MARELLI) | | B 60 T |
| | --- | | |
| A | FR-A-  966 476 (BENDIX-WESTINGHOUSE) | | |
| | --- | | |
| A,D | GB-A-1 294 987  (WESTINGHOUSE) | | |
| | ----- | | |

The present search report has been drawn up for all claims

| Place of search | Date of completion of the search | Examiner |
|---|---|---|
| THE HAGUE | 28-07-1982 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82